(19) **Europäisches Patentamt / European Patent Office / Office européen des brevets**

(11) **EP 4 337 997 B1**

(12) **FASCICULE DE BREVET EUROPEEN**

(45) Date de publication et mention
de la délivrance du brevet:
**28.01.2026   Bulletin 2026/05**

(21) Numéro de dépôt: **22724824.2**

(22) Date de dépôt: **05.05.2022**

(51) Classification Internationale des Brevets (IPC):
**G02B 5/20** *(2006.01)*

(52) Classification Coopérative des Brevets (CPC):
**G02B 5/201;** G01J 2003/2826

(86) Numéro de dépôt international:
**PCT/FR2022/050866**

(87) Numéro de publication internationale:
**WO 2022/238639 (17.11.2022 Gazette 2022/46)**

(54) **FILTRE MULTI-SPECTRAL**

MULTISPEKTRALFILTER

MULTI-SPECTRAL FILTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **11.05.2021   FR 2104978**

(43) Date de publication de la demande:
**20.03.2024   Bulletin 2024/12**

(73) Titulaire: **Safran Electronics & Defense
75015 Paris (FR)**

(72) Inventeur: **DAVENEL, Arnaud
77550 MOISSY-CRAMAYEL (FR)**

(74) Mandataire: **Ernest Gutmann - Yves Plasseraud S.A.S.
C/o Plasseraud IP
104 Rue de Richelieu
CS 92104
75080 Paris Cedex 02 (FR)**

(56) Documents cités:
EP-A- 3 187 909          EP-A1- 3 557 625
WO-A2-2009/120928        US-A1- 2013 077 958
US-A1- 2014 054 448      US-A1- 2015 144 770
US-A1- 2016 064 434      US-A1- 2018 170 093

- PIERRE-JEAN LAPRAY ET AL: "Multispectral Filter Arrays: Recent Advances and Practical Implementation", SENSORS, vol. 14, no. 11, 17 November 2014 (2014-11-17), pages 21626 - 21659, XP055715395, DOI: 10.3390/s141121626
- MONNO YUSUKE ET AL: "Multispectral demosaicking with novel guide image generation and residual interpolation", 2014 IEEE INTERNATIONAL CONFERENCE ON IMAGE PROCESSING (ICIP), IEEE, 27 October 2014 (2014-10-27), pages 645 - 649, XP032966671, DOI: 10.1109/ICIP.2014.7025129

EP 4 337 997 B1

**Description**

Domaine technique de l'invention

L'invention concerne le domaine d'imagerie multi-spectrale, en particulier l'invention concerne un procédé de configuration d'un filtre multi-spectral pour un capteur multi-spectral et la définition de sa structure.

Etat de la technique antérieure

Un capteur d'images est composé d'une pluralité de photosites arrangés en grille sur toute la surface des capteurs. Les photosites captent l'intensité de la lumière à laquelle ils sont exposés sans distinction des longueurs d'onde de la lumière et donc des couleurs. Pour distinguer les couleurs par le capteur d'images, un filtre multi-spectral est déposé sur le capteur. Le filtre multi-spectral filtre au niveau de chaque photosite une unique plage de longueur d'onde, caractérisée classiquement par sa longueur d'onde dite moyenne ou centrale.

Ainsi, le filtre permet de détecter une unique couleur pour chaque photosite, laquelle couleur correspond à l'intégration spectrale du flux reçu passant dans le filtre avec la transmission spectrale du filtre filtre spécifiquement placé sur ledit photosite, et correspond à la longueur d'onde moyenne ou centrale dudit filtre. Un traitement d'image ultérieur des données acquises par les photosites permet de reconstituer une image en plusieurs couleurs d'une scène observée.

Des filtres multispectraux sont connus des documents Pierre-Jean Lapray ET AL: "Multispectral Filter Arrays: Recent Advances and Practical Implementation",Sensors, vol. 14, no. 11, 17 novembre 2014 (2014-11-17), pages 21626-21659; EP 3 187 909 A1; US 2015/144770 A1; EP 3 557 625 A1; WO 2009/120928 A2; US 2018/170093 A1; US 2013/077958 A1; US 2016/064434 A1; US 2014/054448 A1 et MONNO YUSUKE ET AL: "Multispectral demosaicking with novel guide image generation and residual interpolation",2014 IEEE INTERNATIONAL CONFERENCE ON IMAGE PROCESSING (ICIP), IEEE, 27 octobre 2014 (2014-10-27), pages 645-649.

Les filtres multi-spectraux actuels sont caractérisés par un motif élémentaire constitué d'un nombre de photosites proches du nombre de plage de longueur d'onde à détecter. Par exemple, le filtre de Bayer, dit filtre RVB, est constitué d'un motif élémentaire 2*2 possédant deux photosites détectant la couleur verte, d'un photosite détectant la couleur rouge et d'un photosite détectant la couleur bleue. Chaque photosite ne détectant qu'une couleur, la chaine optronique en aval du capteur doit interpoler pour chaque photosite les deux couleurs restantes qui n'ont pas été détectées. Cette étape est appelée démosaïquage ou dématriçage ou encore débayerisation. Pour des applications multispectrales, il existe des filtres présentant un motif élémentaire 3 fois 3 permettant de détecter un nombre plus important de bandes spectrales, à savoir neuf. Cependant, ce type de filtre peut poser des problèmes lors de l'étape de débayerisation conduisant alors à une qualité d'image non constante pour les neuf couleurs. En effet, un problème d'échantillonnage en relation avec la réponse percussionnelle optique (PSF) apparaît, ladite réponse étant elle-même liée par les phénomènes de diffraction à la longueur d'onde et au nombre d'ouverture. Ainsi ce type de filtres multi-spectraux ne prend pas en compte les capacités d'échantillonnage du capteur vis-à-vis de la diffraction du système optique au niveau des photosites, ce qui réduit la précision et la fidélité de la chaine optronique complète optique-capteur-démosaïquage . Ce type de filtres multi-spectraux ne prend pas en compte et les capacités d'échantillonnage du capteur vis-à-vis de la diffraction du système optique au niveau des photosites, ce qui réduit la précision et la fidélité de la chaine optronique complète optique-capteur-démosaïquage. Le présent exposé vise à remédier à ces inconvénients.

Résumé de l'invention

A cet effet, le présent exposé un filtre multi-spectral à matrice de filtrage pour un capteur à matrice de capteurs élémentaires ou photosites, ladite matrice de filtrage comprenant un motif élémentaire formé d'un arrangement de N cellules élémentaires aptes à filtrer des longueurs d'ondes centrales $\lambda_1,..., \lambda_k,..., \lambda_N$, la position des cellules élémentaires sensibles aux longueurs d'ondes centrales dans le motif élémentaire étant déterminée de sorte que : chaque longueur d'onde étant associée à un entier $e_1, ..., e_k,..., e_N$, choisi de sorte que chacun des produits $e_1 x \lambda_1, ..., e_k x \lambda_k, ..., e_N x \lambda_N$ soit sensiblement constant, chaque cellule élémentaire sensible à la longueur d'onde centrale $\lambda_k$, est positionnée à $e_k$ positions dans le motif élémentaire de sorte que le rapport maximal entre la distance entre deux positions proximales de la cellule élémentaire sensible à ladite longueur d'onde centrale et la longueur d'onde centrale associée soit minimal.

La longueur d'onde centrale associée d'une cellule peut correspondre au barycentre pondéré des longueurs d'onde par la transmission spectrale du filtre considéré dit « à la longueur d'onde centrale. ». Autrement dit, les longeurs d'onde sont pondérées par les transmissions spectrales aux longeurs d'onde considérées.

En particulier, la longueur d'onde centrale associée d'une cellule peut être déterminée selon la formule suivante :

$$\frac{\sum_1^n \lambda_i * transmission_{\lambda_k}}{\sum_1^n transmission_{\lambda_k}}$$

avec $transmission_{\lambda_k}$ étant la transmission spectrale de l'onde centrale associée $\lambda_k$.

Le motif élémentairepeut être le suivant :

$\lambda_9 \pm \Delta\lambda_9 \, \lambda_3 \pm \Delta\lambda_3 \, \lambda_6 \pm \Delta\lambda_6 \, \lambda8 \pm \Delta\lambda_8 \, \lambda_3 \pm \Delta\lambda_3 \, \lambda_7 \pm \Delta\lambda_7 \, \lambda_9 \pm \Delta\lambda_9 \, \lambda_4 \pm \Delta\lambda_4 \, \lambda_7 \pm \Delta\lambda_7 \, \lambda_1 \pm \Delta\lambda_1 \, \lambda_5 \pm \Delta\lambda_5 \, \lambda_9 \pm \Delta\lambda_9 \, \lambda_6 \pm \Delta\lambda_6 \, \lambda_5 \pm \Delta\lambda_5 \, \lambda_8 \pm \Delta\lambda_8 \, \lambda_1 \pm \Delta\lambda_1 \, \lambda_5 \pm \Delta\lambda_5 \, \lambda_8 \pm \Delta\lambda_8 \, \lambda_2 \pm \Delta\lambda_2 \, \lambda_8 \pm \Delta\lambda_8 \, \lambda_6 \pm \Delta\lambda_6 \, \lambda_4 \pm \Delta\lambda_4 \, \lambda_4 \pm \Delta\lambda_4 \, \lambda_2 \pm \Delta\lambda_2 \, \lambda_6 \pm \Delta\lambda_6 \, \lambda_3 \pm \Delta\lambda_3 \, \lambda_6 \pm \Delta\lambda_6 \, \lambda_9 \pm \Delta\lambda_9 \, \lambda_7 \pm \Delta\lambda_7 \, \lambda_3 \pm \Delta\lambda_3 \, \lambda_8 \pm \Delta\lambda_8 \, \lambda_1 \pm \Delta\lambda_1 \, \lambda_7 \pm \Delta\lambda_7 \, \lambda_9 \pm \Delta\lambda_9 \, \lambda_7 \pm \Delta\lambda_7 \, \lambda_4 \pm \Delta\lambda_4 \, \lambda_4 \pm \Delta\lambda_4 \, \lambda_5 \pm \Delta\lambda_5 \, \lambda_9 \pm \Delta\lambda_9 \, \lambda_6 \pm \Delta\lambda_6 \, \lambda_5 \pm \Delta\lambda_5 \, \lambda_8 \pm \Delta\lambda_8 \, \lambda_6 \pm \Delta\lambda_6 \, \lambda_5 \pm \Delta\lambda_5 \, \lambda_8 \pm \Delta\lambda_8 \, \lambda_6 \pm \Delta\lambda_6 \, \lambda_8 \pm \Delta\lambda_8 \, \lambda_2 \pm \Delta\lambda_2 \, \lambda_4 \pm \Delta\lambda_4 \, \lambda_9 \pm \Delta\lambda_9 \, \lambda_3 \pm \Delta\lambda_3 \, \lambda_2 \pm \Delta\lambda_2 \, \lambda_1 \pm \Delta\lambda_1 \, \lambda_4 \pm \Delta\lambda_4 \, \lambda_9 \pm \Delta\lambda_9 \, \lambda_3 \pm \Delta\lambda_3 \, \lambda_1 \pm \Delta\lambda_1 \, \lambda_8 \pm \Delta\lambda_8 \, \lambda_6 \pm \Delta\lambda_6 \, \lambda_7 \pm \Delta\lambda_7 \, \lambda_9 \pm \Delta\lambda_9 \, \lambda7 \pm \Delta\lambda_7 \, \lambda_7 \pm \Delta\lambda_7 \, \lambda_7 \pm \Delta\lambda_7 \, \lambda_5 \pm \Delta\lambda_5 \, \lambda_9 \pm \Delta\lambda_9 \, \lambda_6 \pm \Delta\lambda_6 \, \lambda_5 \pm \Delta\lambda_5 \, \lambda_8 \pm \Delta\lambda_8 \, \lambda_4 \pm \Delta\lambda_4 \, \lambda_5 \pm \Delta\lambda_5 \, \lambda_8 \pm \Delta\lambda_8 \, \lambda_6 \pm \Delta\lambda_6 \, \lambda_8 \pm \Delta\lambda_8 \, \lambda_4 \pm \Delta\lambda_4 \, \lambda_2 \pm \Delta\lambda_2 \, \lambda_9 \pm \Delta\lambda_9 \, \lambda_1 \pm \Delta\lambda_1 \, \lambda_6 \pm \Delta\lambda_6 \, \lambda_3 \pm \Delta\lambda_3 \, \lambda \pm \Delta\lambda_2$

Avec les longueurs d'onde $\{\lambda_1\text{-}\lambda_9\}$ étant la série suivante $\{1100 \,;\, 917 \,;\, 786 \,;\, 688 \,;\, 611 \,;\, 550 \,;\, 500 \,;\, 458 \,;\, 423\}$, et $\Delta\lambda_k$ étant un écart de longueur d'onde prédéterminé pour chaque longueur d'onde.

L'écart $\Delta\lambda_k$ de longueur d'onde peut être égal à la différence entre deux longueurs d'onde consécutives $\lambda_k, \lambda_{k+1}$.

L'écart $\Delta\lambda_k$ de longueur d'onde peut être égal à la moitié de la différence entre deux longueurs d'onde consécutives $\lambda_k, \lambda_{k+1}$.

L'écart $\Delta\lambda_k$ de longueur d'onde peut être égal au quart de la différence entre deux longueurs d'ondes consécutives $\lambda_k, \lambda_{k+1}$.

La présente invention concerne également un procédé de détermination d'une matrice de filtrage multi-spectral pour un capteur, le procédé comprenant :

- fournir N longueurs d'onde centrales $\lambda_1, ..., \lambda_k, ..., \lambda_N$ à filtrer par la matrice de filtrage,
- déterminer un motif élémentaire de la matrice de filtrage dans la matrice de filtrage,

la détermination du motif élémentaire comprenant:

- associer un entier $e_1, ..., e_k, ..., e_N$ à chaque longueur d'onde centrale, chaque entier étant choisi de sorte que le produit $e_1 x \, \lambda_1, ..., e_k x \, \lambda_k, ..., e_N x \, \lambda_N$ de chaque entier et de la longueur d'onde centrale associée soit sensiblement constant,
- pour chaque longueur d'onde centrale $\lambda_k$, déterminer $e_k$ positions de la cellule élémentaire sensible à ladite longueur d'onde centrale $\lambda_k$ dans le motif élémentaire de sorte que le rapport entre la distance maximale entre deux positions les plus proches, ou proximales, de la cellule élémentaire sensible à ladite longueur d'onde et la longueur d'onde associée audit entier soit minimal.

Le choix des entiers assurant un produit sensiblement constant entre chaque entier et la longueur d'onde centrale associée permet d'uniformiser statistiquement la fonction de transfert du capteur d'images. Le placement judicieux des $e_k$ longueurs d'ondes centrales $\lambda_k$, permet de prendre en compte la fréquence de coupure optique et la fréquence d'échantillonnage spatial du capteur pour chaque longueur d'onde. La matrice de filtrage déterminée par le procédé est ainsi plus fiable et précis car il prend en compte les caractéristiques du capteur d'images.

La matrice de filtrage peut présenter des dimensions correspondant à une grille de photosites constituant le capteur d'images. Le motif élémentaire peut être répété dans la matrice de filtrage.

Selon un mode de réalisation, la détermination des $e_k$ positions de chacune des cellules élémentaires sensibles aux N longueurs d'onde centrale $\lambda_k$ peut comprendre déterminer une fonction de coût $\varnothing$, ladite fonction de coût étant déterminée par la formule suivante :

[math 1]

$$\forall k, \qquad \forall(i_k, j_k), \qquad \varnothing = \max\left[\frac{\min_{i_k}\{dist(i_k, j_k)\}}{\lambda_k}\right]$$

Avec k un entier compris entre $\{1, ..., N\}$, $i_k, j_k$ étant des entiers compris entre $\{1, ..., e_k\}$, $j_k$ étant différent de $i_k$, $dist(i_k, j_k)$ étant la distance euclidienne dans le plan entre les positions des $i_k^{ème}$ et $j_k^{ème}$ photosites sensibles à la longueur d'onde centrale $\lambda_k$ et $\min_{i_k}\{dist(i_k, j_k)\}$ étant pour chaque position $i_k$ la distance minimale à l'ensemble des positions $j_k$, ladite fonction de coût intégrant la répétition du motif.

Ladite distance peut être la distance réelle entre des cellules élémentaires.

La pluralité de positions de chaque cellule élémentaire sensible à la longueur d'onde peut donc être déterminée par les positions pour lesquelles la fonction de coût est la plus faible. Les produits $e_k x \, \lambda_k$ sont ainsi considérés comme constants lorsqu'ils satisfont la formule suivante :

[math 2]

$$\left| \frac{\text{écartype}(e_k x \lambda_k)}{\text{moyenne}(e_k x \lambda_k)} \right| \leq A$$

A étant choisie inférieure ou égale à 15% et de préférence inférieure à 7%

Les entiers $e_k$ sont ainsi choisis pour satisfaire à cette formule.

Le motif élémentaire peut être une matrice carrée. Ceci permet de réduire les ressources de calcul nécessaires pour mettre en œuvre le procédé et simplifier la fabrication.

La dimension du motif élémentaire est déterminée par la formule suivante :

[math 3]

$$\sum_1^N e_k = p^2$$

avec p étant la dimension du motif élémentaire.

Le procédé comprend en outre : attribuer à chaque position du motif élémentaire une longueur d'onde centrale associée à l'entier agencé à ladite position du motif élémentaire.

Le procédé peut comprendre pour une ou plusieurs positions du motif élémentaire, une étape de réaffectation d'une première longueur d'onde des longueurs d'onde par une seconde longueur d'onde différente présentant une fonction de coût à ladite position plus faible que la fonction de coût de la première longueur d'onde à ladite position.

Le nombre prédéterminé N de longueurs d'onde est supérieur à trois et est en particulier égal à neuf.

Le présent exposé concerne aussi une matrice de filtrage pour un capteur multi-spectral obtenue par le procédé tel que précité.

Le présent exposé concerne un capteur multi-spectral comprenant un filtre correspondant à une matrice de filtrage obtenue par le procédé de détermination de matrice de filtrage précité.

Le présent exposé concerne un dispositif de détermination d'une matrice de filtrage pour un capteur multi-spectral comportant un circuit de traitement pour la mise en oeuvre du procédé précité.

Le présent exposé concerne un programme informatique comportant des instructions pour la mise en oeuvre du procédé de détermination de matrice de filtrage précité, lorsque lesdites instructions sont exécutées par un processeur d'un circuit de traitement.

Brève description des figures

[Fig. 1] la figure 1 représente un exemple de réalisation d'un procédé pour configurer un filtre multi-spectral,

[Fig. 2] la figure 2 représente un filtre obtenu par le procédé de la figure 1, dans lequel les longueurs d'ondes centrales $\lambda_k$ sont chacune représentées par leur entier caractéristique $e_k$, chaque longueur d'onde centrales $\lambda_k$ étant présentes $e_k$ fois,

[Fig. 3] la figure 3 représente un dispositif de capture d'images muni d'un filtre de la figure 2.

[Fig. 4] la figure 4 représente le filtre avec les longueurs d'ondes centrales $\lambda_k$ positionnées $e_k$ fois, correspondant au filtre de la figure 2.

Description détaillée de l'invention

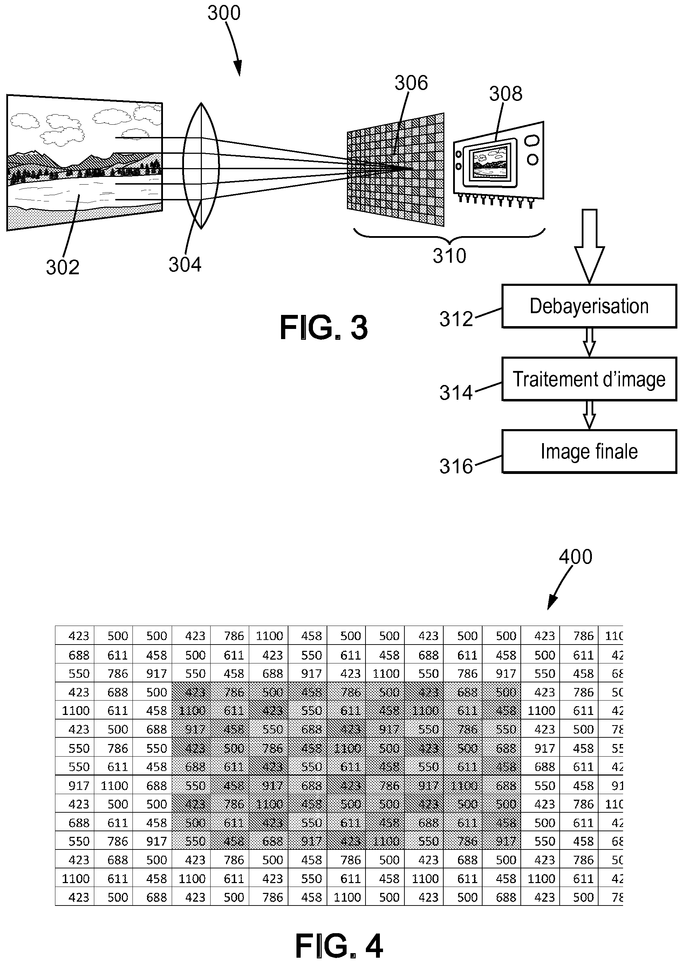

Le dispositif de capture d'images 300 de la figure 4 est configuré pour fournir une image d'une scène 302. Le dispositif de capture d'images 300 comprend un étage d'optique 304 suivi d'un étage d'électronique 310. L'étage d'optique 304 comprend par exemple un objectif optique. L'étage d'électronique 310 comprend un capteur d'images 308 composé d'une pluralité de photosites arrangés en grille sur toute la surface du capteur 308. L'étage d'électronique 310 est configuré pour appliquer un filtre 302 sur le capteur d'images 308. L'étage d'électronique 310 est encore configuré pour réaliser les étapes suivantes :

Etape 312 de démosaïquage, aussi appelé dématriçage ou débayerisation, d'interpolation des données détectées par le capteur d'images 308.

Etape 314 de traitement d'images à partir des données interpolées lors de l'étape 312. Etape 316 de retour d'une image finale représentant la scène 302.

Pour le système d'imagerie multispectral, le capetur 300 est situé au foyer optique de ces systèmes, l'image formée par étage d'optique 304 situé en amont du capteur 300 à partir de la scène observée. Le filtre 302 est agencé au niveau du capteur d'images 308.

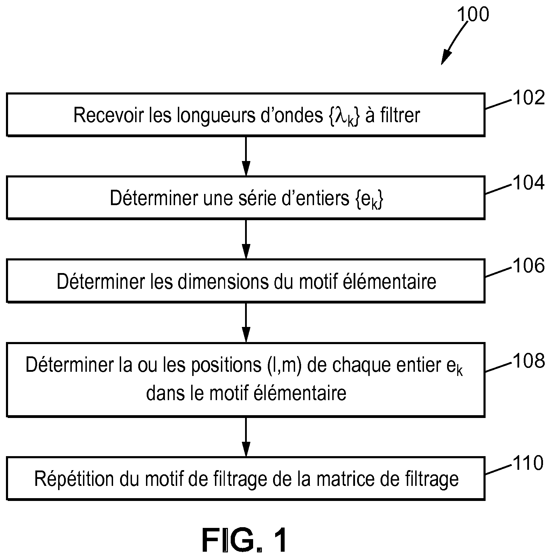

La figure 1 représente un exemple de réalisation d'un procédé pour configurer un filtre multispectral pour un capteur d'images, par exemple le filtre 302 du dispositif 300. Le capteur d'images peut être un capteur à large bande spectrale par exemple en Si, InGaAs, InSb, HgCdTe. Le capteur d'images comprend une pluralité de photosites arrangés en grille sur toute la surface dudit capteur. Le procédé 100 détermine une matrice de filtrage à appliquer au capteur d'images. En particulier, le procédé 100 détermine un motif élémentaire répété dans la matrice de filtrage.

Le procédé 100 comprend une étape 102 de réception ou détermination de longueurs d'onde centrales à filtrer $\lambda_1, ..., \lambda_k, ..., \lambda_N$, avec $k$ étant un entier et $N$ étant le nombre de longueur d'onde $\lambda_k$. Par exemple, pour un capteur en Si, les longueurs d'onde sont comprises entre 380 nm et 1100 nm. Dans une réalisation particulière, les longueurs d'onde centrales peuvent être {1100 ; 917 ; 786 ; 688 ; 611 ; 550 ; 500 ; 458 ; 423} nm. Dans cet exemple, on préférera un capteur en Si ou InGaAs car ces matériaux sont photosensibles aux longueurs d'ondes de la plage de valeurs de longueurs d'ondes mentionnées entre 423nm et 1100nm. Les longueurs d'onde centrale peuvent être différentes de +/-100nm des valeurs de la liste {1100 ; 917 ; 786 ; 688 ; 611 ; 550 ; 500 ; 458 ; 423}nm. Les largeurs spectrales de chacun des filtres seront à mi-hauteur proportionnelles à une fraction comprise entre ¼ et 1 de l'écart entre 2 longueurs d'onde centrale consécutives. Chaque longueur d'onde varie dans un intervaille définit par un écart de longueur d'onde autour de ladite longueur d'onde, l'écart de longueur d'onde pouvant être une fraction comprise entre 0,25 et 1 de la différence entre deux longueurs d'onde centrale consécutives.

Ainsi, les bornes minimales et maximales des filtres pourront prendre des valeurs parmi celles du tableau suivant, avec une incertitude de +/-20nm :

[Tableau 1]

| fraction | 0.25 | | 0.5 | | 1 | |
|---|---|---|---|---|---|---|
| Longueur d'onde | Borne max | Borne min | Borne max | Borne min | Borne max | Borne min |
| 1100 | 1146 | 1054 | 1192 | 1009 | 1283 | 917 |
| 917 | 956 | 878 | 996 | 839 | 1074 | 760 |
| 786 | 815 | 757 | 843 | 729 | 901 | 672 |
| 688 | 710 | 666 | 732 | 644 | 776 | 601 |
| 611 | 628 | 594 | 646 | 577 | 680 | 542 |
| 550 | 564 | 536 | 578 | 522 | 606 | 495 |
| 500 | 512 | 489 | 523 | 477 | 546 | 454 |
| 458 | 468 | 448 | 477 | 439 | 497 | 420 |
| 423 | 432 | 414 | 441 | 406 | 458 | 388 |

Le procédé 100 comprend une étape 104 de détermination d'une série d'entiers $e_1, ..., e_k, ..., e_N$. Chaque entier $e_k$ est associé à une longueur d'onde centrale $\lambda_k$. Les entiers $e_k$ sont déterminés pour que le produit $e_1 x \lambda_1, ..., e_k x \lambda_k, ..., e_N x \lambda_N$ de chaque entier $e_k$ et de la longueur d'onde $\lambda_k$ associée soit sensiblement constant.

Par exemple, les entiers $e_k$ sont déterminés pour satisfaire la formule suivante :

[math 4]

$$\left| \frac{\text{écartype}(e_k x \lambda_k)}{\text{moyenne}(e_k x \lambda_k)} \right| \leq A$$

La valeur A est choisie pour être inférieure ou égale à 15%. La valeur A est de préférence inférieure à 7%. Le choix des entiers $e_k$ permet d'uniformiser la quantité d'énergie repliée à chaque longueur d'onde centrale $\lambda_k$. En effet, pour un signal ayant une bande passante [0, fc] où fc représente la fréquence de coupure optique à 1/( $\lambda$*F), F étant le nombre d'ouverture et avec une fréquence d'échantillonnage fech, alors pour les fréquences appartenant à [0 ; fech], le signal est bien échantillonné et sera fidèlement reproduit mais pour les fréquences appartenant à [fech ; fc], le signal passera mais ne sera pas fidèlement reproduit. Dans ce dernier cas, il sera littéralement replié sur la partie correctement reproduite.

Ceci permet d'uniformiser, c'est-à-dire rendre autant que possible égal/constant, le ratio entre la fréquence de coupure optique et la fréquence d'échantillonnage spatial $fech_k$ du capteur pour chaque longueur d'onde $\lambda_k$.

En effet, la fréquence d'échantillonnage spatial $fech_k$ du capteur est en moyenne égale à l'inverse de la distance moyenne entre les photosites sensibles à la longueur d'onde centrale $\lambda_k$, et donc proportionnelle au nombre $e_k$ de photosites sensibles à $\lambda_k$ dans le motif élémentaire.

Ainsi, l'uniformisation des chaines optroniques aux différentes longueurs d'onde est réalisée par un produit $e_k$x $\lambda_k$ le plus homogène possible voire constant.

Le procédé 100 comprend une étape 106 de détermination de la dimension du motif élémentaire. Par exemple, le motif élémentaire peut être carré, ce qui simplifie la mise en œuvre du procédé 100 en terme de ressources de calcul nécessaires. L'étape 106 peut dans ce cas être réalisée en résolvant la formule suivante :

[math 5]

$$\sum_{1}^{N} e_k = p^2$$

Avec p étant la dimension du motif élémentaire.

Pour les longueurs d'onde centrales suivantes : {1100 ; 917 ; 786 ; 688 ; 611 ; 550 ; 500 ; 458 ; 423} nm, la série d'entiers peut être {5 ; 6 ; 7 ; 8 ; 9 ; 10 ; 11 ; 12 ; 13} et la dimension du motif élémentaire peut être 9x9.

Le procédé 100 comprend ensuite une étape 108 de détermination d'une ou plusieurs positions pour chaque longueur d'onde centrale $\lambda_k$. Les longueurs d'ondes centrales sont positionnés (l, m) dans le motif élémentaire de sorte que le ratio entre la distance au photosite le plus proche sensible à la même longueur d'onde centrale et la longueur d'onde centrale est minimale.

L'étape 108 comprend la minimisation d'une fonction de coût $\emptyset$. Pour cela, une fonction de coût $\emptyset$ est déterminée pour chaque entier $e_k$ selon la formule suivante :

[math 6]

$$\forall k, \qquad \forall(i_k, j_k), \qquad \emptyset = \max\left[\frac{min_{i_k}\{dist(i_k, j_k)\}}{\lambda_k}\right]$$

Avec k un entier compris entre {1, ... , N}, $i_k$, $j_k$ étant des entiers compris entre {1, ..., $e_k$}, $i_k$ étant différent de $j_k$, dist $(i_k, j_k)$ étant la distance euclidienne dans le plan entre les positions des $i_k$ème et $j_k$ème photosites sensibles à la longueur d'onde centrale $\lambda_k$ et $min_{i_k}\{dist(i_k, j_k)\}$ étant pour chaque position $i_k$ la distance minimale à l'ensemble des positions $j_k$.

Ainsi, une longueur d'onde centrale $\lambda_k$ est attribuée pour chaque position (l, m) du motif élémentaire.

La distance $dist(i_k, j_k)$ peut être déterminée entre deux positions de photosite sensibles à la longueur d'onde centrale $\lambda_k$ au sein d'un même motif élémentaire ou entre une première position de photosite $\lambda_k$ dans un premier motif élémentaire et une seconde position de photosite $\lambda_k$ dans un second motif élémentaire adjacent au premier motif élémentaire. Ainsi, la fonction de coût $\emptyset$ intègre la répétition du motif.

Le procédé 100 peut comprendre une étape de génération de la matrice de filtrage par répétition du motif élémentaire dans la matrice de filtrage. La matrice de filtrage présente des dimensions correspondant aux nombre et à la répartition des photosites dans le capteur d'images. Une longueur d'onde centrale $\lambda_k$ est ainsi affectée à chaque photosite du capteur d'image.

L'étape 108 peut aboutir à une pluralité de motifs élémentaires distincts. Dans ce cas, le procédé 100 peut comprendre une étape de sélection d'un motif élémentaire parmi les motifs élémentaires issus de l'étape 108. Cette sélection peut être aléatoire.

Le procédé 100 peut comprendre une étape d'optimisation du motif élémentaire. Cette étape comprend la réaffectation d'une position sensible à une longueur d'onde centrale $\lambda_k$ à une seconde longueur d'onde centrale $\lambda_k$ dans le motif élémentaire. Le motif élémentaire après réaffectation présente une fonction de coût plus faible que le motif élémentaire initial. Les réaffections sont choisies par observation ou par essai de combinaison. Les entiers associés aux longueurs d'onde centrale évoluent alors en $e'_k = e_k - 1$ et $e'_h = e_h + 1$.

L'étape d'optimisation peut être réalisée plusieurs fois, pour plusieurs longueurs d'onde centrales et plusieurs positions.

Le procédé 100 comprend en outre une étape 110 de répétition du motif déterminé dans la matrice de filtrage.

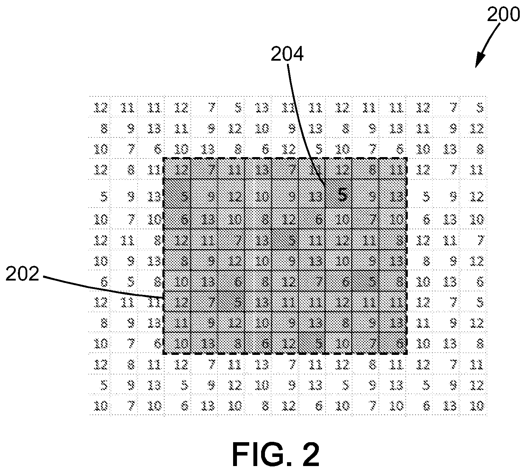

A titre d'exemple, le procédé peut aboutir à la matrice de filtrage 200 représentée sur la figure 2 pour la série d'entiers {5 ; 6 ; 7 ; 8 ; 9 ; 10 ; 11 ; 12 ; 13} associée à la série de longueurs d'onde {1100 ; 917 ; 786 ; 688 ; 611 ; 550 ; 500 ; 458 ; 423} positionnées sur le filtre de la figure 4 et aboutissant au filtre 400. La matrice de filtrage 200 comprend une pluralité de motifs élémentaires 202 répétés dans la matrice de filtrage et obtenu à l'étape 108. Le motif élémentaire est répété dans la matrice de filtrage à l'étape 110. L'entier $e_k$ agencé à la position 204 du motif élémentaire est remplacé par un autre entier $e'_k$ permettant une fonction de coût plus faible.

La matrice de filtrage 200 obtenue par le procédé 100 est plus précise et plus fiable, en particulier pour un nombre important de longueurs d'onde, i.e. un nombre supérieur à 3. De plus, une telle matrice de filtrage 200 permet de réduire les erreurs d'interpolation postérieure pendant le traitement d'images car la matrice de filtrage prend en compte la fréquence d'échantillonnage spatial du capteur et sa fréquence de coupure optique.

Les longueurs d'ondes de la matrice de filtrage 400 correspondent aux entiers de la matrice de filtrage 200.

Le capteur d'images peut être équipée de la matrice de filtrage 200 ou la matrice de filtrage 400 de la figure 4 pour détecter 9 couleurs distinctes correspondant aux longueurs d'onde {1100 ; 917 ; 786 ; 688 ; 611 ; 550 ; 500 ; 458 ; 423} nm. Le capteur d'images peut comprendre un module de traitement d'images configuré pour interpoler les données acquises par le capteur d'images pour constituer une image.

## Revendications

1. Filtre multi-spectral à matrice de filtrage pour un capteur à matrice de capteurs élémentaires, ladite matrice de filtrage comprenant un motif élémentaire formé d'un arrangement de N cellules élémentaires aptes à filtrer des longueurs d'ondes centrales $\lambda_1$, ..., $\lambda_k$..., $\lambda_N$, la position des cellules élémentaires sensibles aux longueurs d'ondes centrales dans le motif élémentaire étant déterminée de sorte que : chaque longueur d'onde étant associée à un entier $e_1$, ..., $e_k$, ..., $e_N$, choisi de sorte que chacun des produits $e_1 x \lambda_1$, ..., $e_k x \lambda_k$..., $e_N x \lambda_N$ soit sensiblement constant, chaque cellule élémentaire sensible à la longueur d'onde centrale $\lambda_k$, est positionnée à $e_k$ positions dans le motif élémentaire de sorte que le rapport maximal entre la distance entre deux positions proximales de ladite cellule élémentaire sensible à la longueur d'onde centrale $\lambda_k$ et la longueur d'onde centrale $\lambda_k$ associée audit entier $e_k$ soit minimal.

2. Filtre multi-spectral à matrice de filtrage pour un capteur à matrice de capteurs élémentaires, ladite matrice de filtrage comprenant un motif élémentaire formé d'un arrangement de N cellules élémentaires aptes à filtrer des longueurs d'ondes centrales $\lambda_1$,.... $\lambda_k$,....,$\lambda_N$ la position des cellules élémentaires sensibles aux longueurs d'ondes centrales dans le motif élémentaire étant déterminée pour former le motif élémentaire suivant :

$\lambda_9 \pm \Delta\lambda_9 \; \lambda_3 \pm \Delta\lambda_3 \; \lambda_6 \pm \Delta\lambda_6 \; \lambda_8 \pm \Delta\lambda_8 \; \lambda_3 \pm \Delta\lambda_3 \; \lambda_7 \pm \Delta\lambda_7 \; \lambda_9 \pm \Delta\lambda_9 \; \lambda_4 \pm \Delta\lambda_4 \; \lambda_7 \pm \Delta\lambda_7 \; \lambda_1 \pm \Delta\lambda_1 \; \lambda_5 \pm \Delta\lambda_5 \; \lambda_9 \pm \Delta\lambda_9 \; \lambda_6 \pm \Delta\lambda_6$
$\lambda_5 \pm \Delta\lambda_5 \; \lambda_8 \pm \Delta\lambda_8 \; \lambda_1 \pm \Delta\lambda_1 \; \lambda_5 \pm \Delta\lambda_5 \; \lambda_8 \pm \Delta\lambda_8 \; \lambda_2 \pm \Delta\lambda_2 \; \lambda_8 \pm \Delta\lambda_8 \; \lambda_6 \pm \Delta\lambda_6 \; \lambda_4 \pm \Delta\lambda_4 \; \lambda_4 \pm \Delta\lambda_4 \; \lambda_2 \pm \Delta\lambda_2 \; \lambda_6 \pm \Delta\lambda_6 \; \lambda_3 \pm \Delta\lambda_3$
$\lambda_6 \pm \Delta\lambda_6 \; \lambda_9 \pm \Delta\lambda_9 \; \lambda_7 \pm \Delta\lambda_7 \; \lambda_3 \pm \Delta\lambda_3 \; \lambda_8 \pm \Delta\lambda_8 \; \lambda_1 \pm \Delta\lambda_1 \; \lambda \pm \Delta\lambda_7 \; \lambda_9 \pm \Delta\lambda_9 \; \lambda_7 \pm \Delta\lambda_7 \; \lambda_4 \pm \Delta\lambda_4 \; \lambda_4 \pm \Delta\lambda_4 \; \lambda_5 \pm \Delta\lambda_5 \; \lambda_9 \pm \Delta\lambda_9$
$\lambda_6 \pm \Delta\lambda_6 \; \lambda_5 \pm \Delta\lambda_5 \; \lambda_8 \pm \Delta\lambda_8 \; \lambda_6 \pm \Delta\lambda_6 \; \lambda_5 \pm \Delta\lambda_5 \; \lambda_8 \pm \Delta\lambda_8 \; \lambda_6 \pm \Delta\lambda_6 \; \lambda8 \pm \Delta\lambda_8 \; \lambda_2 \pm \Delta\lambda_2 \; \lambda_4 \pm \Delta\lambda_4 \; \lambda_9 \pm \Delta\lambda_9 \; \lambda_3 \pm \Delta\lambda_3 \; \lambda_2 \pm \Delta\lambda_2$
$\lambda_1 \pm \Delta\lambda_1 \; \lambda_4 \pm \Delta\lambda_4 \; \lambda9 \pm \Delta\lambda_9 \; \lambda_3 \pm \Delta\lambda_3 \; \lambda_1 \pm \Delta\lambda_1 \; \lambda_8 \pm \Delta\lambda_8 \; \lambda_6 \pm \Delta\lambda_6 \; \lambda_7 \pm \Delta\lambda_7 \; \lambda_9 \pm \Delta\lambda_9 \; \lambda_7 \pm \Delta\lambda_7 \; \lambda_7 \pm \Delta\lambda_7 \; \lambda_7 \pm \Delta\lambda_7 \; \lambda_5 \pm \Delta\lambda_3$
$\lambda_9 \pm \Delta\lambda_9 \; \lambda_6 \pm \Delta\lambda_6 \; \lambda_5 \pm \Delta\lambda_5 \; \lambda_8 \pm \Delta\lambda_8 \; \lambda_4 \pm \Delta\lambda_4 \; \lambda_5 \pm \Delta\lambda_5 \; \lambda_8 \pm \Delta\lambda_8 \; \lambda_6 \pm \Delta\lambda_6 \; \lambda_8 \pm \Delta\lambda_8 \; \lambda_4 \pm \Delta\lambda_4 \; \lambda_2 \pm \Delta\lambda_2 \; \lambda_9 \pm \Delta\lambda_9 \; \Delta\lambda_1 \pm$
$\Delta\lambda_1 \; \lambda_6 \pm \Delta\lambda_6 \; \lambda_3 \pm \Delta\lambda_3 \; \lambda_2 \pm \Delta\lambda_2$ Les longueurs d'onde {$\lambda_1$-$\lambda_9$} étant la série suivante {1100 ; 917 ; 786 ; 688 ; 611 ; 550 ; 500 ; 458 ; 423}, et $\Delta\lambda_k$ étant un écart de longueur d'onde prédéterminé pour chaque longueur d'onde.

3. Filtre selon la revendication 2, dans lequel l'écart $\Delta\lambda_k$ de longueur d'onde est égal à la différence entre deux longueurs d'ondes consécutives $\lambda_k$, $\lambda_{k+1}$.

4. Filtre selon la revendication 2, dans lequel l'écart $\Delta\lambda_k$ de longueur d'onde est égal à la moitié de la différence entre deux longueurs d'ondes consécutives $\lambda_k$, $\lambda_{k+1}$.

5. Filtre selon la revendication 2, dans lequel l'écart $\Delta\lambda_k$ de longueur d'onde est égal au quart de la différence entre deux longueurs d'ondes consécutives $\lambda_k$, $\lambda_{k+1}$.

6. Procédé (100) de détermination d'une matrice de filtrage multi-spectral pour un capteur, le procédé comprenant :

   - fournir (102) N longueurs d'onde centrales $\lambda_1$, ..., $\lambda_k$,..., $\lambda_N$ à filtrer par la matrice de filtrage,
   - déterminer un motif élémentaire (202) de la matrice de filtrage (200) dans la matrice de filtrage,

la détermination du motif élémentaire comprenant :

- associer (104) un entier $e_1$, ..., $e_k$, ..., $e_N$ à chaque longueur d'onde, chaque entier étant choisi de sorte que chaque produit $e_1 x\ \lambda_1$, ..., $e_k x\ \lambda_k$..., $e_k x\ \lambda_N$ de chaque entier et de la longueur d'onde centrale associée soit sensiblement constant,
- pour chaque longueur d'onde centrale $\lambda_k$, déterminer (108) $e_k$ positions de la cellule élémentaire sensible à ladite longueur d'onde centrale dans le motif élémentaire de sorte que le rapport maximal entre la distance entre deux positions proximales de la cellule élémentaire sensible à ladite longueur d'onde centrale et la longueur d'onde centrale associée soit minimal.

7. Procédé (100) selon la revendication 6, dans lequel la détermination (108) de la pluralité des $e_k$ positions de chaque cellule élémentaire sensible à la longueur d'onde centrale $\lambda_k$ comprend déterminer une fonction de coût Ø pour l'ensemble des $N$ longueurs d'onde centrale, ladite fonction de coût étant déterminée par la formule suivante :

[math 7]

$$\forall k, \qquad \forall (i_k, j_k), \qquad \emptyset = \max \left[ \frac{min_{i_k}\{dist(i_k, j_k)\}}{\lambda_k} \right]$$

Avec k un entier compris entre $\{1, ..., N\}$, $i_k$, $j_k$ étant des entiers appartenant à $\{1, ..., e_k\}$, $j_k$ étant différent de $i_k$, $dist(i_k, j_k)$ étant la distance euclidienne dans le plan entre les positions des $i_k^{ème}$ et $j_k^{ème}$ photosites sensibles à la longueur d'onde centrale $\lambda_k$ et $min_{i_k}\{dist(i_k, j_k)\}$ étant pour chaque position $i_k$ la distance minimale à l'ensemble des positions $j_k$, ladite fonction de coût intégrant la répétition du motif.

la pluralité de positions de chaque cellule élémentaire sensible à la longueur d'onde centrale étant déterminée par les positions ($l$, $m$) du motif élémentaire pour lesquelles la fonction de coût est la plus faible.

8. Procédé (100) selon la revendication 6 ou 7, dans lequel les produits $e_k x\ \lambda_k$ satisfont la formule suivante :

[math 8]

$$\left| \frac{\text{écartype}(e_k x \lambda_k)}{\text{moyenne}(e_k x \lambda_k)} \right| \leq A$$

où A est choisie inférieure ou égale à 15% et de préférence inférieure à 7%.

9. Procédé (100) selon l'une des revendications 6 à 8, dans lequel le motif élémentaire est une matrice carrée.

10. Procédé (100) selon l'une des revendications 6 à 8, dans lequel la dimension du motif élémentaire est déterminée par la formule suivante :

[math 9]

$$\sum_{1}^{N} e_k = p^2$$

avec p étant la dimension du motif élémentaire.

11. Procédé (100) selon l'une des revendications 6 à 10, dans lequel le nombre prédéterminé N de longueurs d'onde est supérieur à trois.

12. Matrice (200) de filtrage pour un capteur multi-spectral obtenue par le procédé (100) selon l'une des revendications 6 à 11.

13. Capteur multi-spectral comprenant équipé d'un filtre correspondant à une matrice de filtrage obtenue par le procédé (100) selon l'une des revendications 6 à 11.

**14.** Dispositif de détermination d'une matrice de filtrage pour un capteur multi-spectral comportant un circuit de traitement pour la mise en œuvre du procédé (100) selon l'une des revendications 6 à 11.

**15.** Programme informatique comportant des instructions pour la mise en œuvre du procédé (100) selon l'une des revendications 6 à 11, lorsque lesdites instructions sont exécutées par un processeur d'un circuit de traitement.

**Patentansprüche**

**1.** Multispektralfilter mit Filtermatrix für einen Sensor mit einer Matrix aus Elementarsensoren, wobei die Filtermatrix ein Elementarmuster umfasst, das aus einer Anordnung von $N$ Elementarzellen gebildet ist, die in der Lage sind, Mittenwellenlängen $\lambda_1, .... \lambda_k, ..., \lambda_N$ auszufiltern, wobei die Position der für die Mittenwellenlängen empfindlichen Elementarzellen in dem Elementarmuster so bestimmt ist, dass bei einer jeder Wellenlänge zugeordneten ganzen Zahl $e_1, ..., e_k, ..., e_N$, die so gewählt ist, dass jedes der Produkte $e_1 \times \lambda_1, ..., e_k \times \lambda_k, ..., e_N \times \lambda_N$ im Wesentlichen konstant ist, jede für die Mittenwellenlänge $\lambda_k$ empfindliche Elementarzelle an $e_k$ Positionen in dem Elementarmuster positioniert ist, sodass das maximale Verhältnis des Abstands zwischen zwei benachbarten Positionen der Elementarzelle, die für die Mittenwellenlänge $\lambda_k$ empfindlich ist, zu der Mittenwellenlänge $\lambda_k$, der die ganze Zahl $e_k$ zugeordnet ist, minimal ist.

**2.** Multispektralfilter mit Filtermatrix für einen Sensor mit einer Matrix aus Elementarsensoren, wobei die Filtermatrix ein Elementarmuster umfasst, das aus einer Anordnung von N Elementarzellen gebildet ist, die in der Lage sind, Mittenwellenlängen $\lambda_1, .... \lambda_k, ..., \lambda_N$ auszufiltern, wobei die Position der für die Mittenwellenlängen empfindlichen Elementarzellen in dem Elementarmuster so bestimmt ist, dass sie das folgende Elementarmuster bilden:
$\lambda_9 \pm \Delta\lambda_9 \ \lambda_3 \pm \Delta\lambda_3 \ \lambda_6 \pm \Delta\lambda_6 \ \lambda_8 \pm \Delta\lambda_8 \ \lambda_3 \pm \Delta\lambda_3 \ \lambda_7 \pm \Delta\lambda_7 \ \lambda_9 \pm \Delta\lambda_9 \ \lambda_4 \pm \Delta\lambda_4 \ \lambda_7 \pm \Delta\lambda_7 \ \lambda_1 \pm \Delta\lambda_1 \ \lambda_5 \pm \Delta\lambda_5 \ \lambda_9 \pm \Delta\lambda_9 \ \lambda_6 \pm \Delta\lambda_6$
$\lambda_5 \pm \Delta\lambda_5 \ \lambda_8 \pm \Delta\lambda_8 \ \lambda_1 \pm \Delta\lambda_1 \ \lambda_5 \pm \Delta\lambda_5 \ \lambda_8 \pm \Delta\lambda_8 \ \lambda_2 \pm \Delta\lambda_2 \ \lambda_8 \pm \Delta\lambda_8 \ \lambda_6 \pm \Delta\lambda_6 \ \lambda_4 \pm \Delta\lambda_4 \ \lambda_4 \pm \Delta\lambda_4 \ \lambda_2 \pm \Delta\lambda_2 \ \lambda_6 \pm \Delta\lambda_6 \ \lambda_3 \pm \Delta\lambda_3$
$\lambda_6 \pm \Delta\lambda_6 \ \lambda_9 \pm \Delta\lambda_9 \ \lambda_7 \pm \Delta\lambda_7 \ \lambda_3 \pm \Delta\lambda_3 \ \lambda_8 \pm \Delta\lambda_8 \ \lambda_1 \pm \Delta\lambda_1 \ \lambda_7 \pm \Delta\lambda_7 \ \lambda_9 \pm \Delta\lambda_9 \ k_7 \pm \Delta\lambda_7 \ \lambda_4 \pm \Delta\lambda_4 \ \lambda_4 \pm \Delta\lambda_4 \ \lambda_5 \pm \Delta\lambda_5 \ \lambda_9 \pm \Delta\lambda_9$
$\lambda_6 \pm \Delta\lambda_6 \ \lambda_5 \pm \Delta\lambda_5 \ \lambda_8 \pm \Delta\lambda_8 \ \lambda_6 \pm \Delta\lambda_6 \ \lambda_5 \pm \Delta\lambda_5 \ \lambda_8 \pm \Delta\lambda_8 \ \lambda_6 \pm \Delta\lambda_6 \ \lambda_8 \pm \Delta\lambda_8 \ \lambda_2 \pm \Delta\lambda_2 \ \lambda_4 \pm \Delta\lambda_4 \ \lambda_9 \pm \Delta\lambda_9 \ \lambda_3 \pm \Delta\lambda_3 \ \lambda_2 \pm \Delta\lambda_2$
$\lambda_1 \pm \Delta\lambda_1 \ \lambda_4 \pm \Delta\lambda_4 \ \lambda_9 \pm \Delta\lambda_4 \ \lambda_3 \pm \Delta\lambda_3 \ \lambda_1 \pm \Delta\lambda_1 \ \lambda_8 \pm \Delta\lambda_8 \ \lambda_6 \pm \Delta\lambda_6 \ \lambda_7 \pm \Delta\lambda_7 \ \lambda_9 \pm \Delta\lambda_9 \ \lambda_7 \pm \Delta\lambda_7 \ \lambda_7 \pm \Delta\lambda_7 \ \lambda_7 \pm \Delta\lambda_7 \ \lambda_5 \pm \Delta\lambda_5$
$\lambda_9 \pm \Delta\lambda_9 \ \lambda_6 \pm \Delta\lambda_6 \ \lambda_5 \pm \Delta\lambda_5 \ \lambda_8 \pm \Delta\lambda_8 \ \lambda_4 \pm \Delta\lambda_4 \ \lambda_5 \pm \Delta\lambda_5 \ \lambda_8 \pm \Delta\lambda_8 \ \lambda_6 \pm \Delta\lambda_6 \ \lambda_8 \pm \Delta\lambda_8 \ \lambda_4 \pm \Delta\lambda_4 \ \lambda_2 \pm \Delta\lambda_2 \ \lambda_9 \pm \Delta\lambda_9 \ \lambda_1 \pm \Delta\lambda_1$
$\lambda_6 \pm \Delta\lambda_6 \ \lambda_3 \pm \Delta\lambda_3 \ \Delta\lambda_2 \pm \Delta\lambda_2$
wobei die Wellenlängen $\{\lambda_1 - \lambda_9\}$ die Reihe {1100; 917; 786; 688; 611; 550; 500; 458; 423} sind und $\Delta\lambda_k$ eine für jede Wellenlänge vorbestimmte Wellenlängenabweichung ist.

**3.** Filter nach Anspruch 2, wobei die Wellenlängenabweichung $\Delta\lambda_k$ gleich der Differenz zwischen zwei aufeinanderfolgenden Wellenlängen $\lambda_k, \lambda_{k+1}$ ist.

**4.** Filter nach Anspruch 2, wobei die Wellenlängenabweichung $\Delta\lambda_k$ gleich der Hälfte der Differenz zwischen zwei aufeinanderfolgenden Wellenlängen $\lambda_k, \lambda_{k+1}$ ist.

**5.** Filter nach Anspruch 2, wobei die Wellenlängenabweichung $\Delta\lambda_k$ gleich einem Viertel der Differenz zwischen zwei aufeinanderfolgenden Wellenlängen $\lambda_k, \lambda_{k+1}$ ist.

**6.** Verfahren (100) zum Bestimmen einer Multispektralfiltermatrix für einen Sensor, wobei das Verfahren umfasst:

- Bereitstellen (102) von $N$ Mittenwellenlängen $\lambda_1, .... \lambda_k, ..., \lambda_N$, die durch die Filtermatrix ausgefiltert werden sollen,
- Bestimmen eines Elementarmusters (202) der Filtermatrix (200) in der Filtermatrix,

wobei die Bestimmung des Elementarmusters umfasst:

- Zuordnen (104) einer ganzen Zahl $e_1, ..., e_k, ..., e_N$ zu jeder Wellenlänge, wobei jede ganze Zahl so gewählt wird, dass jedes Produkt $e_1 \times \lambda_1, ..., e_k \times \lambda_k, ..., e_N \times \lambda_N$ jeweils aus einer ganzen Zahl und der zugehörigen Mittenwellenlänge im Wesentlichen konstant ist,
- für jede Mittenwellenlänge $\lambda_k$ Bestimmen (108) von $e_k$ Positionen der für die Mittenwellenlänge empfindlichen Elementarzelle in dem Elementarmuster, sodass das maximale Verhältnis des Abstands zwischen zwei benachbarten Positionen der Elementarzelle, die für die Mittenwellenlänge empfindlich ist, zu der zugehörigen Mittenwellenlänge minimal ist.

7. Verfahren (100) nach Anspruch 6,

wobei die Bestimmung (108) der Vielzahl von $e_k$ Positionen jeder für die Mittenwellenlänge $\lambda_k$ empfindlichen Elementarzelle die Bestimmung einer Verlustfunktion Ø für die Gesamtheit der $N$ Mittenwellenlängen umfasst, wobei die Verlustfunktion durch die folgende Formel bestimmt ist:

[math 7]

$$\forall k, \quad \forall(i_k, j_k), \quad \emptyset = \max\left[\frac{min_{i_k}\{dist(i_k, j_k)\}}{\lambda_k}\right]$$

wobei k eine ganze Zahl zwischen {1, ..., $N$} ist, $i_k, j_k$ ganze Zahlen aus {1, ..., $e_k$} sind, $j_k$ von $i_k$ verschieden ist, *dist* $(i_k, j_k)$ der euklidische Abstand in der Ebene zwischen den Positionen der $i_k$-ten und der $j_k$-ten Fotostelle ist, die für die Mittenwellenlänge $\lambda_k$ empfindlich sind, und $min_{ik}\{dist(i_k, j_k)\}$ für jede Position $i_k$ der minimale Abstand zu allen Positionen $j_k$ ist, wobei die genannte Verlustfunktion die Wiederholung des Musters integriert, wobei die Vielzahl von Positionen jeder Elementarzelle, die für die Mittenwellenlänge empfindlich ist, durch die Positionen ($l, m$) des Elementarmusters bestimmt wird, für die die Verlustfunktion am geringsten ist.

8. Verfahren (100) nach Anspruch 6 oder 7,

wobei die Produkte $e_k$ x $\lambda_k$ die folgende Formel erfüllen:

[math 8]

$$\left|\frac{Standardabweichung\ (e_k x\ \lambda_k)}{Durchschnitt\ (e_k x\ \lambda_k)}\right| \leq A$$

wobei A kleiner oder gleich 15 % und vorzugsweise kleiner als 7 % gewählt ist.

9. Verfahren (100) nach einem der Ansprüche 6 bis 8,
   wobei das Elementarmuster eine quadratische Matrix ist.

10. Verfahren (100) nach einem der Ansprüche 6 bis 8,

wobei die Größe des Elementarmusters durch die folgende Formel bestimmt ist:

[math 9]

$$\sum_{1}^{N} e_k = p^2$$

wobei $p$ die Größe des Elementarmusters ist.

11. Verfahren (100) nach einem der Ansprüche 6 bis 10,
    wobei die vorbestimmte Anzahl $N$ von Wellenlängen größer als drei ist.

12. Filtermatrix (200) für einen Multispektralsensor, die durch das Verfahren (100) nach einem der Ansprüche 6 bis 11 erhalten wird.

13. Multispektralsensor, der mit einem Filter ausgestattet ist, das einer Filtermatrix entspricht, die durch das Verfahren (100) nach einem der Ansprüche 6 bis 11 erhalten wird.

14. Vorrichtung zur Bestimmung einer Filtermatrix für einen Multispektralsensor, enthaltend eine Verarbeitungsschaltung zur Durchführung des Verfahrens (100) nach einem der Ansprüche 6 bis 11.

15. Computerprogramm mit Anweisungen zur Durchführung des Verfahrens (100) nach einem der Ansprüche 6 bis 11, wenn die Anweisungen von einem Prozessor einer Verarbeitungsschaltung ausgeführt werden.

**Claims**

1. A multispectral filter with a filtering array for a sensor with an array of elementary sensors, said filtering array comprising an elementary pattern formed of an arrangement of $N$ elementary cells capable of filtering central wavelengths $\lambda_1, ..., \lambda_k, ..., \lambda_N$, the position of the elementary cells sensitive to the central wavelengths in the elementary pattern being determined so that: each wavelength being associated with an integer $e_1, ..., e_k, ..., e_N$, selected so that each of the products $e_1 x \lambda_1, ..., e_k x \lambda_k, ..., e_N x \lambda_N$ is substantially constant, each elementary cell sensitive to the central wavelength $\lambda_k$ is positioned at $e_k$ positions in the elementary pattern so that the maximum ratio between the distance between two proximal positions of said elementary cell sensitive to the central wavelength and the associated central wavelength is minimal.

2. Multispectral filter according with a filtering matrix for a sensor with a matrix of elementary sensors, said filtering matrix comprising an elementary pattern formed of an arrangement of N elementary cells adapted to filter central wavelengths $\lambda_1, ..., \lambda_k, ..., \lambda_N$, the position of the elementary cells sensitive to the central wavelengths in the elementary pattern being determined to form the following elementary pattern:
$\lambda_9 \pm \Delta\lambda_9 \lambda_3 \pm \Delta\lambda_3 \lambda_6 \pm \Delta\lambda_6 \lambda_8 \pm \Delta\lambda_8 \lambda_3 \pm \Delta\lambda_3 \lambda_7 \pm \Delta\lambda_7 \lambda_9 \pm \Delta\lambda_9 \lambda_4 \pm \Delta\lambda_4 \lambda_7 \pm \Delta\lambda_7 \lambda_1 \pm \Delta a_{,1} \lambda_5 \pm \Delta\lambda_5 \lambda_9 \pm \Delta\lambda_9 \lambda_6 \pm \Delta\lambda_6$
$\lambda_5 \pm \Delta\lambda_5 \lambda_8 \pm \Delta\lambda_8 \lambda_1 \pm \Delta\lambda_1 \lambda_5 \pm \Delta\lambda_5 \lambda_8 \pm \Delta\lambda_8 \lambda_2 \pm \Delta\lambda_2 \lambda_8 \pm \Delta\lambda_8 \lambda_6 \pm \Delta\lambda_6 \lambda_4 \pm \Delta\lambda_4 \lambda_4 \pm \Delta\lambda_4 \lambda_2 \pm \Delta\lambda_2 \lambda_6 \pm \Delta\lambda_6 \lambda_3 \pm \Delta\lambda_3$
$\lambda_6 \pm \Delta\lambda_6 \lambda_9 \pm \Delta\lambda_9 k_7 \pm \Delta\lambda_7 \lambda_3 \pm \Delta\lambda_3 \lambda_8 \pm \Delta\lambda_8 \lambda_1 \pm \Delta\lambda_1 \lambda \pm \Delta\lambda_7 \lambda_9 \pm \Delta\lambda_9 \lambda \pm \Delta\lambda_7 \lambda_4 \pm \Delta\lambda_4 \lambda_4 \pm \Delta\lambda_4 k_5 \pm \Delta\lambda_3 \lambda_9 \pm \Delta\lambda_9 \lambda_6$
$\pm \Delta\lambda_6 \lambda_5 \pm \Delta\lambda_5 \lambda_8 \pm \Delta\lambda_8 \lambda_6 \pm \Delta\lambda_6 \lambda_5 \pm \Delta\lambda_5 \lambda_8 \pm \Delta\lambda_8 \lambda_6 \pm \Delta\lambda_6 \lambda_8 \pm \Delta\lambda_8 \lambda_2 \pm \Delta\lambda_2 \lambda_4 \pm \Delta\lambda_4 \lambda_9 \pm \Delta\lambda_9 \lambda_3 \pm \Delta\lambda_3 \lambda_2 \pm \Delta\lambda_2 \lambda_1$
$\pm \Delta\lambda_1 \lambda_4 \pm \Delta\lambda_4 \lambda_9 \pm \Delta\lambda_9 \lambda_3 \pm \Delta\lambda_3 \lambda_1 \pm \Delta\lambda_1 \lambda_8 \pm \Delta\lambda_8 \lambda_6 \pm \Delta\lambda_6 \lambda \pm \Delta\lambda_7 \lambda_9 \pm \Delta\lambda_9 \lambda_7 \pm \Delta\lambda_7 \lambda \pm \Delta\lambda_7 \lambda_7 \pm \Delta\lambda_7 \lambda_3 \pm \Delta\lambda_3 \lambda_9 \pm$
$\Delta\lambda_9 \lambda_6 \pm \Delta\lambda_6 \lambda_5 \pm Ak_5 \lambda_8 \pm \Delta\lambda_8 \lambda_4 \pm \Delta\lambda_4 \lambda_5 \pm Ak_5 \lambda_8 \pm \Delta_8 \lambda_6 \pm \Delta\lambda_6 \lambda_8 \pm \Delta\lambda_8 \lambda_4 \pm \Delta\lambda_4 \lambda_2 \pm \Delta\lambda_2 \lambda_9 \pm \Delta\lambda_9 \lambda_1 \pm \Delta\lambda_1 \lambda_6 \pm$
$\Delta\lambda_6 \lambda_3 \pm \lambda_3 \lambda_2 \pm \Delta\lambda_2$ The wavelengths $\{\lambda_1-\lambda_9\}$ being the following series {1,100; 917; 786; 688; 611; 550; 500; 458; 423}, and $\Delta\lambda_k$ being a predetermined wavelength deviation for each wavelength.

3. The filter according to claim 2, wherein the wavelength deviation $\Delta\lambda_k$ is equal to the difference between two consecutive wavelengths $\lambda_k, \lambda_{k+1}$.

4. The filter according to claim 2, wherein the wavelength deviation $\Delta\lambda_k$ is equal to half the difference between two consecutive wavelengths $\lambda_k, \lambda_{k+1}$.

5. The filter according to claim 2, wherein the wavelength deviation $\Delta\lambda_k$ is equal to a quarter of the difference between two consecutive wavelengths $\lambda_k, \lambda_{k+1}$.

6. A method (100) for determining a multispectral filtering array for a sensor, the method comprising:

   - providing (102) $N$ central wavelengths $\lambda_1, ..., \lambda_k, ..., \lambda_N$ to be filtered by the filtering array,
   - determining an elementary pattern (202) of the filtering array (200) in the filtering array,

   the determination of the elementary pattern comprising:

   - associating (104) an integer $e_1, ..., e_k, ..., e_N$ with each wavelength, each integer being selected so that each product $e_1 x \lambda_1, ..., e_k x \lambda_k, ..., e_N x \lambda_N$ of each integer and of the associated central wavelength is substantially constant,
   - for each central wavelength $\lambda_k$, determining (108) $e_k$ positions of the elementary cell sensitive to said central wavelength in the elementary pattern so that the maximum ratio between the distance between two proximal positions of the elementary cell sensitive to said central wavelength and the associated central wavelength is minimal.

7.  The method (100) according to claim 6, wherein the determination (108) of the plurality of $e_k$ positions of each elementary cell sensitive to the central wavelength $\lambda_k$ comprises determining a cost function $\emptyset$ for all of the $N$ central wavelengths, said cost function being determined by the following formula:

[math 7]

$$\forall k, \qquad \forall (i_k, j_k), \qquad \emptyset = \max \left[ \frac{min_{i_k}\{dist(i_k, j_k)\}}{\lambda_k} \right]$$

With k being an integer comprised between {1, ...,$N$}, $i_k$, $j_k$ being integers belonging to {1, ..., $e_k$}, $j_k$ being different from $i_k$, $dist(i_k, j_k)$ being the Euclidean distance in the plane between the positions of the $i_k$<sup>th</sup> and $i_k$<sup>th</sup> photosites sensitive to the central wavelength $\lambda_k$ and $min_{i_k}\{dist(i_k, j_x)\}$ being for each position $i_k$ the minimum distance to all of the positions $j_k$, said cost function integrating the repetition of the pattern.
the plurality of positions of each elementary cell sensitive to the central wavelength being determined by the positions (*l, m*) of the elementary pattern for which the cost function is the lowest.

8.  The method (100) according to claim 6 or 7, wherein the products $e_k x \lambda_k$ meet the following formula:

[math 8]

$$\left| \frac{\text{standard deviation } (e_k x \lambda_k)}{\text{average } (e_k x \lambda_k)} \right| \leq A$$

where A is selected less than or equal to 15% and preferably less than 7%.

9.  The method (100) according to one of claims 6 to 8, wherein the elementary pattern is a square array.

10.  The method (100) according to one of claims 6 to 8, wherein the dimension of the elementary pattern is determined by the following formula:

[math 9]

$$\sum_{1}^{N} e_k = p^2$$

with p being the dimension of the elementary pattern.

11.  The method (100) according to one of claims 6 to 10, wherein the predetermined number $N$ of wavelengths is greater than three.

12.  A filtering array (200) for a multispectral sensor obtained by the method (100) according to one of claims 6 to 11.

13.  A multispectral sensor comprising equipped with a filter corresponding to a filtering array obtained by the method (100) according to one of claims 6 to 11.

14.  A device for determining a filtering array for a multispectral sensor including a processing circuit for implementing the method (100) according to one of claims 6 to 11.

15.  A computer program including instructions for the implementation of the method (100) according to one of claims 6 to 11, when said instructions are executed by a processor of a processing circuit.

100

| Recevoir les longueurs d'ondes $\{\lambda_k\}$ à filtrer | — 102 |

| Déterminer une série d'entiers $\{e_k\}$ | — 104 |

| Déterminer les dimensions du motif élémentaire | — 106 |

| Déterminer la ou les positions (l,m) de chaque entier $e_k$ dans le motif élémentaire | — 108 |

| Répétition du motif de filtrage de la matrice de filtrage | — 110 |

## FIG. 1

FIG. 2

300

306

308

310

FIG. 3

302 304

312 Debayerisation

314 Traitement d'image

316 Image finale

400

| 423 | 500 | 500 | 423 | 786 | 1100 | 458 | 500 | 500 | 423 | 500 | 500 | 423 | 786 | 110 |
| 688 | 611 | 458 | 500 | 611 | 423 | 550 | 611 | 458 | 688 | 611 | 458 | 500 | 611 | 42 |
| 550 | 786 | 917 | 550 | 458 | 688 | 917 | 423 | 1100 | 550 | 786 | 917 | 550 | 458 | 68 |
| 423 | 688 | 500 | 423 | 786 | 500 | 458 | 786 | 500 | 423 | 688 | 500 | 423 | 786 | 50 |
| 1100 | 611 | 458 | 1100 | 611 | 423 | 550 | 611 | 458 | 1100 | 611 | 458 | 1100 | 611 | 42 |
| 423 | 500 | 688 | 917 | 458 | 550 | 688 | 423 | 917 | 550 | 786 | 550 | 423 | 500 | 78 |
| 550 | 786 | 550 | 423 | 500 | 786 | 458 | 1100 | 500 | 423 | 500 | 688 | 917 | 458 | 55 |
| 550 | 611 | 458 | 688 | 611 | 423 | 550 | 611 | 458 | 550 | 611 | 458 | 688 | 611 | 42 |
| 917 | 1100 | 688 | 550 | 458 | 917 | 688 | 423 | 786 | 917 | 1100 | 688 | 550 | 458 | 91 |
| 423 | 500 | 500 | 423 | 786 | 1100 | 458 | 500 | 500 | 423 | 500 | 500 | 423 | 786 | 110 |
| 688 | 611 | 458 | 500 | 611 | 423 | 550 | 611 | 458 | 688 | 611 | 458 | 500 | 611 | 42 |
| 550 | 786 | 917 | 550 | 458 | 688 | 917 | 423 | 1100 | 550 | 786 | 917 | 550 | 458 | 68 |
| 423 | 688 | 500 | 423 | 786 | 500 | 458 | 786 | 500 | 423 | 688 | 500 | 423 | 786 | 50 |
| 1100 | 611 | 458 | 1100 | 611 | 423 | 550 | 611 | 458 | 1100 | 611 | 458 | 1100 | 611 | 42 |
| 423 | 500 | 688 | 423 | 500 | 786 | 458 | 1100 | 500 | 423 | 500 | 688 | 423 | 500 | 78 |

FIG. 4

15

## RÉFÉRENCES CITÉES DANS LA DESCRIPTION

**Documents brevets cités dans la description**

- EP 3187909 A1
- US 2015144770 A1
- EP 3557625 A1
- WO 2009120928 A2
- US 2018170093 A1
- US 2013077958 A1
- US 2016064434 A1
- US 2014054448 A1

**Littérature non-brevet citée dans la description**

- **PIERRE-JEAN LAPRAY et al.** Multispectral Filter Arrays: Recent Advances and Practical Implementation. *Sensors*, 17 November 2014, vol. 14 (11), 21626-21659
- Multispectral demosaicking with novel guide image generation and residual interpolation. **MONNO YUSUKE et al.** 2014 IEEE INTERNATIONAL CONFERENCE ON IMAGE PROCESSING (ICIP). IEEE, 27 October 2014, 645-649